# EUROPÄISCHE PATENTSCHRIFT

(11) **EP 0 469 590 B1**
(45) Veröffentlichungstag und Bekanntmachung des Hinweises auf die Patenterteilung: **19.01.1994**
(21) Anmeldenummer: 91112900.5
(22) Anmeldetag: 31.07.1991
(51) Int. Cl.: A61C 17/14

(54) **Vorrichtung zur zahnärztlichen Behandlung**
Device for dental treatment
Dispositif pour traitement dentaire

(30) Priorität: 01.08.1990 DE 4024465
(43) Veröffentlichungstag der Anmeldung: 05.02.1992
(73) Patentinhaber: Eitenmüller, Klaus, Dr., D-64753 Brombachtal (DE)
(72) Erfinder: Eitenmüller, Klaus, Dr., D-64753 Brombachtal (DE)
(74) Vertreter: Tetzner, Volkmar, Dr.-Ing. Dr. jur.

(56) Entgegenhaltungen:
- DE-A- 3 437 054
- DE-U- 8 904 379
- GB-A- 1 232 390
- US-A- 3 612 089

## Beschreibung

Die Erfindung betrifft eine Vorrichtung zur zahnärztlichen Behandlung, enthaltend
a) ein Speibecken,
b) einen in den Mund eines Patienten einführbaren Sauger zum Absaugen von festen und flüssigen Bestandteilen bei der zahnarztlichen Behandlung,
c) eine mit dem Sauger über eine Saugleitung verbundene, bei Entnahme des Saugers angeschaltete Absaugeinrichtung,
d) einen zur zeitweisen Aufnahme von aus dem Speibecken auslaufender Flüssigkeit bestimmten Zwischenbehalter, der über einen Einlaufanschluß mit dem Speibecken und über einen im Bodenbereich des Zwischenbehalters befindlichen Auslaufanschluß mit der Saugleitung derart verbunden ist, daß bei geöffnetem Auslaufanschluß Flüssigkeit unter Schwerkraftwirkung aus dem Speibecken über den Zwischenbehälter abfließen kann,
e) ein im Zwischenbehälter vorgesehenes, durch eine erste Kugel gebildetes erstes bewegliches Absperrorgan zum Verschluß des Auslaufanschlusses,
f) eine den Innenraum des Zwischenbehälters mit der Saugleitung verbindende Bypass-Leitung, deren Durchlaßquerschnitt geringer als der des Auslaufanschlusses des Zwischenbehälters ist,
g) ein im Zwischenbehälter vorgesehenes zweites bewegliches Absperrorgan, das durch einen in der Flüssigkeit des Zwischenbehälters schwimmenden Körper betätigbar ist und das die Bypass-Leitung bis zum Erreichen eines bestimmten Flüssigkeitsstandes im Zwischenbehälter absperrt, bei Überschreiten dieses Flüssigkeitsstandes dagegen freigibt.

Eine Vorrichtung der vorstehend genannten Gattung ist bereits durch die DE-A 34 37 054 bekannt. Das erste bewegliche Absperrorgan wird hierbei durch eine Kugel gebildet, die von Hand mittels eines Stempels angehoben werden kann, um den Zwischenbehälter in bestimmten Zeitabständen vollständig zu entleeren. Das zweite bewegliche Absperrorgan besteht bei dieser bekannten Ausführung aus einer Membran, die beim Erreichen eines bestimmten Flüssigkeitsstandes im Zwischenbehälter von einem zentrisch geführten Schwimmkörper angehoben wird, so daß eine Lochplatte freigelegt wird, die die Flüssigkeit über drei Bohrungen in die aus mehreren parallel angeordneten Rohren bestehende Bypass-Leitung abfließen läßt.

Der Erfindung liegt die Aufgabe zugrunde, eine Vorrichtung der eingangs genannten Gattung so auszubilden, daß bei abgeschalteter Absaugeinrichtung eine automatische Abführung eines im Zwischenbehälter noch vorhandenen Restvolumens erfolgt und im übrigen bei einfacher Konstruktion eine besonders zuverlässige Funktion gewährleistet ist.

Diese Aufgabe wird erfindungsgemäß durch folgende Merkmale gelöst:
h) das erste bewegliche Absperrorgan ist im Zwischenbehalter derart angeordnet,
   - daß es dann, wenn bei abgeschalteter Absaugeinrichtung Flüssigkeit aus dem Speibecken in den Zwischenbehälter gelangt, durch diese Flüssigkeit so weit angehoben wird, daß die Flüssigkeit unter Schwerkraftwirkung über den Auslaufanschluß abfließen kann,
   - während das erste bewegliche Absperrorgan bei eingeschalteter Absaugeinrichtung durch den hierdurch erzeugten Unterdruck den Auslaufanschluß verschließt;
i) das zweite bewegliche Absperrorgan enthält einen verschiebbaren Stempel, der in das der Saugleitung abgewandte Ende der Bypass-Leitung eingreift und der durch eine in der Flüssigkeit des Zwischenbehälters schwimmende zweite Kugel betätigbar ist.

Zweckmäßige Ausgestaltungen der Erfindung sind Gegenstand der Unteransprüche.

In der Zeichnung zeigen
- Fig.1: eine schematische Ansicht der Vorrichtung zur zahnärztlichen Behandlung,
- Fig.2: eine Seitenansicht des Zwischenbehälters eines ersten Ausführungsbeispieles,
- Fig.3: eine gegenüber der Fig.2 um 90° gedrehte Seitenansicht des Zwischenbehälters (erstes Ausführungsbeispiel),
- Fig.4: eine Aufsicht auf den Zwischenbehälter (erstes Ausführungsbeispiel),
- Fig.5: eine Schnittansicht längs der Linie V-V der Fig.3 (erstes Ausführungsbeispiel),
- Fig.6: eine geschnittene Seitenansicht des Zwischenbehälters eines zweiten Ausführungsbeispieles.

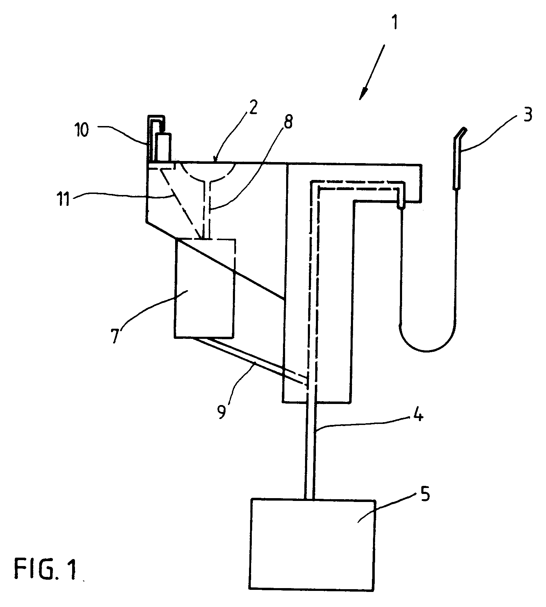

Das in Fig. 1 dargestellte zahnärztliche Behandlungsgerät 1 enthält ein Speibecken 2 sowie einen in den Mund eines Patienten einführbaren Sauger 3 zum Absaugen von festen und flüssigen Bestandteilen bei der zahnärztlichen Behandlung. Der Sauger 3 ist über eine Saugleitung 4 mit einer Absaugeinrichtung 5 verbunden, die bei Entnahme des Saugers 3 angeschaltet wird.

In der Absaugeinrichtung 5 wird einerseits der nötige Unterdruck zur Absaugung erzeugt und andererseits erfolgt die nicht naher erläuterte Trennung und Entsorgung der abgesaugten Bestandteile.

Weiterhin ist ein zur zeitweisen Aufnahme von aus dem Speibecken ablaufender Flüssigkeit bestimmter Zwischenbehälter 7, 7' vorgesehen. Der Zwischenbehälter 7, 7' ist mit dem Speibecken 2 über eine Leitung 8 verbunden, die vorzugsweise durch einen Wellschlauch gebildet wird. Ferner ist der Zwischenbehälter 7, 7' über eine Leitung 9 an die Saugleitung 4 angeschlossen.

Am Speibecken 2 ist außerdem eine Speibecherfüllautomatik 10 vorgesehen, deren Ablauf über eine Leitung 11 auch in den Zwischenbehälter 7, 7' mündet.

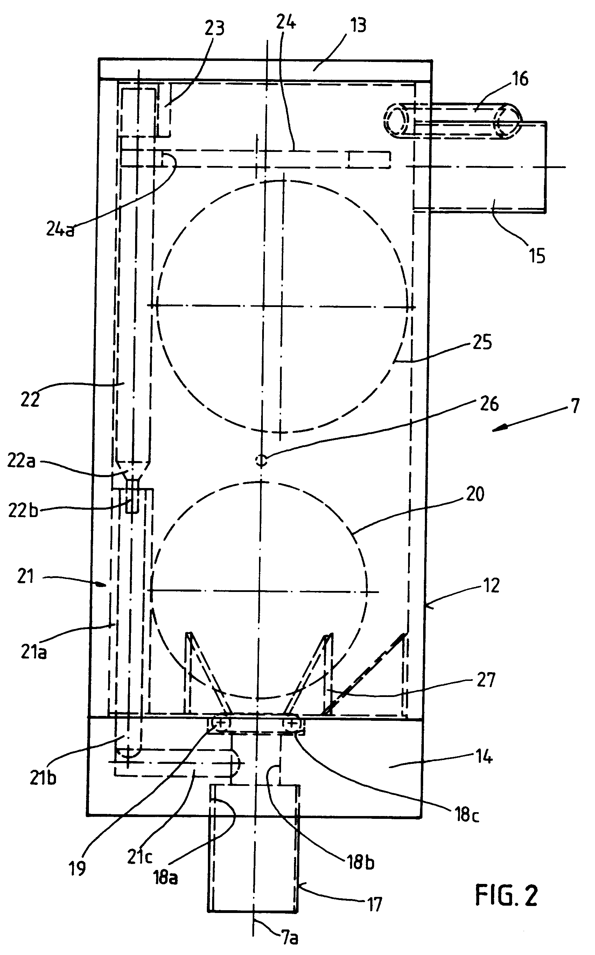

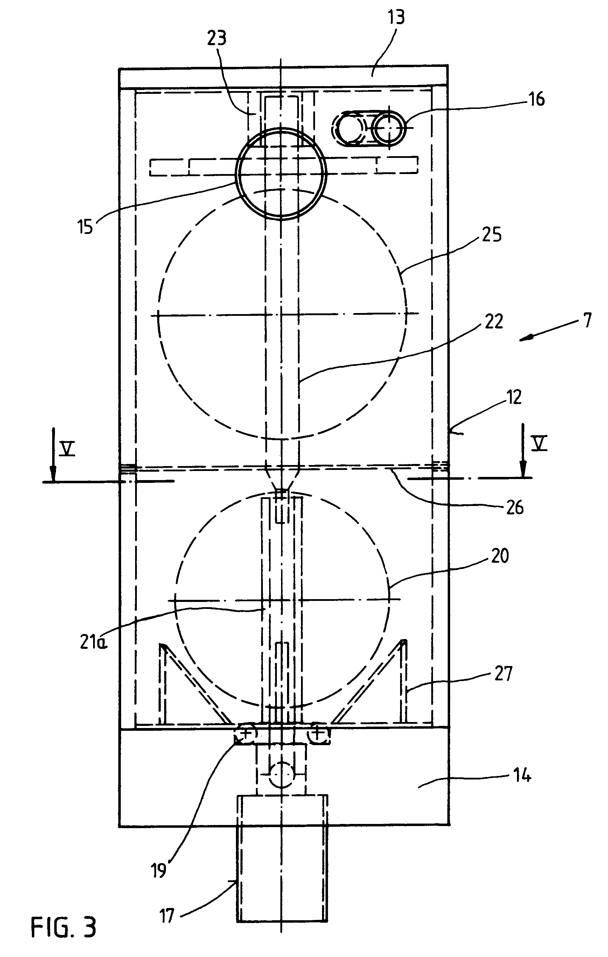

Anhand der Fig.2 bis 5 wird im folgenden der Aufbau des Zwischenbehälters 7 eines ersten Ausführungsbeispieles näher erläutert:

Der Zwischenbehälter 7 wird rein äußerlich im wesentlichen durch ein zylindrisches Gehäuse 12, beispielsweise einen Acrylglaszylinder, mit einem das Gehäuse 12 abschließenden Deckel 13 sowie einer Bodenplatte 14 gebildet.

Im oberen Bereich des Zwischenbehälters 7 ist ein Einlaufanschluß 15 vorgesehen, an den die vom Speibecken 2 ausgehende Leitung 8 angeschlossen wird. In unmittelbarer Nähe dieses Einlaufanschlusses 15 ist ein weiterer Anschluß 16 angeordnet, der über die Leitung 11 mit der Speibecherfüllautomatik 10 in Verbindung steht. Im Rahmen der Erfindung ist es beispielsweise auch möglich, daß die Leitung 11 bereits in die Leitung 8 mündet, so daß der weitere Anschluß 16 nicht benötigt wird.

Im Bodenbereich des Zwischenbehälters 7 befindet sich ein Auslaufanschluß 17, der in gleicher Weise wie der Einlaufanschluß 15 und der weitere Anschluß 16 als Rohrstück ausgebildet ist und in eine entsprechende Ausfräsung 18a der Bodenplatte 14 eingepaßt ist. Im Anschluß an das in der Ausfräsung 18a sitzende Rohr des Auslaufanschlusses 17 ist eine im Durchmesser etwas kleinere Bohrung 18b vorgesehen. Die Bohrung 18b mündet wiederum in eine im Durchmesser größere Ausfräsung 18c, die zur Aufnahme eines Dichtungsringes 19 dient. Der Innendurchmesser dieses Dichtungsringes 19 entspricht dabei etwa dem Durchmesser der Bohrung 18b. Die Achsen der Ausfräsung 18a, der Bohrung 18b sowie der Ausfräsung 18c fallen mit der Achse 7a des Zwischenbehälters 7 zusammen.

Im Innenraum des Zwischenbehälters 7 ist eine mit dem Dichtungsring 19 zusammenwirkende erste Kugel 20 vorgesehen. Ist der Zwischenbehälter 7 über die Leitung 9 an die Saugleitung 4 angeschlossen und ist ferner die Absaugeinrichtung 5 angeschaltet, so wird die Kugel 20 derart auf den Dichtungsring 19 gezogen, daß der Zwischenbehälter 7 luft- und flüssigkeitsdicht abgeschlossen ist. Dichtungsring 19 und Kugel 20 bilden somit das erste bewegliche Absperrorgan für den Auslaufanschluß 17.

Die Bypaßleitung 21 wird durch zwei Bohrungen 21b und 21c in der Bodenplatte 14 sowie durch ein an die Bohrung 21b im Innenraum des Zwischenbehälters 7 anschließendes Rohrstück 21a gebildet. Die Bohrung 21c führt ausgehend von der Bohrung 18b senkrecht zur Achse 7a des Zwischenbehälters 7 nach außen. Anschließend an die Bohrung 21c verläuft die Bohrung 21b parallel zur Achse 7a bis in den Innenraum des Zwischenbehälters 7. Das an die Bohrung 21b anschließende Rohrstück 21a ist eng an der Wand des Gehäuses 12 bis etwa zur Hälfte der axialen Erstreckung des Innenraumes nach oben geführt. Der Durchlaßquerschnitt der Bypaßleitung 21 ist im Vergleich zum Auslaufanschluß geringer ausgebildet, vgl. Fig.2.

Im Innenraum ist in Verlängerung der Bypaßleitung 21 ein in die Bypaßleitung 21 eingreifender Stempel 22 vorgesehen. An seinem der Bypaßleitung 21 zugewandten Ende ist der Stempel 22 konisch ausgebildet, so daß er im in die Bypaßleitung 21 eingeführten Zustand diese luft- und flüssigkeitsdicht abschließt. Der ansonsten zylindrisch ausgebildete Stempel 22 ist nach dem konisch ausgebildeten Bereich 22a mit einem zylindrischen Ansatz 22b versehen, der gegenüber dem übrigen zylindrischen Teil des Stempels 22 im Durchmesser wesentlich geringer ausgebildet ist. Dieser zylindrische Ansatz 22b ist außerdem im Durchmesser kleiner als der Innendurchmesser der Bypaßleitung 21. Der Stempel 22 kann eine Vertikalbewegung parallel zur Achse 7a des Zwischenbehälters 7 ausführen und wird dabei einerseits durch den in die Bypaßleitung 21 eingreifenden zylindrischen Ansatz 22b und andererseits durch eine unmittelbar unter dem Deckel 13 an der Innenwand des Gehäuses 12 angebrachte Hülse 23 geführt. Die Vertikalbewegung des Stempels 22 in Richtung auf den Deckel 13 wird dadurch begrenzt, daß der Stempel 22 am Deckel 13 anstößt. Die Bewegung in entgegengesetzter Richtung ist durch den Sitz des konisch ausgestalteten Bereichs 22a in dem Rohrstück 21a der Bypaßleitung 21 begrenzt.

Der in die Bypaßleitung 21 eingreifende Stempel 22 bildet somit das zweite bewegliche Absperrorgan.

Im oberen Bereich des Stempels 22 knapp unterhalb der Hülse 23 ist am Stempel 22 eine sich parallel zum Deckel 23 erstreckende, kreisförmige Lochplatte 24 angebracht. Sie ist nur mit geringem Abstand zur Innenwand des Gehäuses 12 angebracht, weist jedoch eine große Bohrung 24a auf, um das Ablaufen von durch den Einlaufanschluß 15 oder den weiteren Anschluß 16 einlaufender Flüssigkeit in den unteren Bereich des Innenraumes des Zwischenbehälters 7 zu ermöglichen.

Im Innenraum des Zwischenbehälters 7 ist oberhalb der ersten Kugel 20 und unterhalb der Lochplatte 24 eine zweite Kugel 25 vorgesehen. Der Durchmesser dieser zweiten Kugel 25 ist etwas kleiner als der Abstand des Stempels 22 zur gegenüberliegenden Innenwand des Gehäuses 12. Auf diese Weise ist die zweite Kugel 25 im wesentlichen nur in Richtung der Achse 7a des Zwischenbehälters 7 verschiebbar.

Zur Vermeidung einer Berührung zwischen der ersten Kugel 20 und der zweiten Kugel 25 ist zwischen beiden Kugeln ein quer durch den Innenraum des Zwischenbehälters 7 verlaufender Nylonfaden 26 angeordnet. Selbstverständlich kann statt des Nylonfadens 26 auch ein anderes geeignetes Abgrenzungselement verwendet werden.

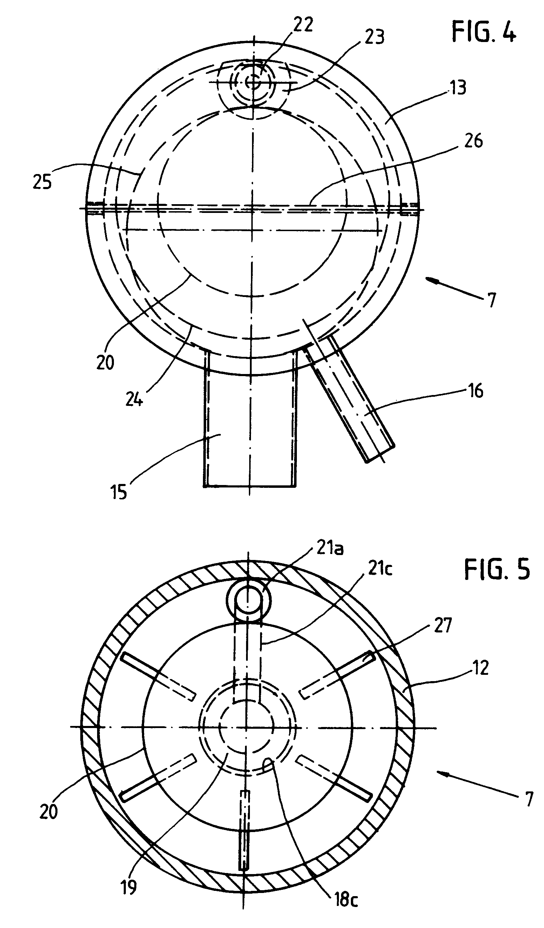

Zur Gewährleistung des einwandfreien Sitzes der ersten Kugel 20 auf dem Dichtungsring 19 sind Führungen 27 für die Kugel vorgesehen. Der Durchmesser der ersten Kugel 20 beträgt genau den doppelten Abstand zwischen der Achse 7a des Zwischenbehälters 7 und der Außenwandung des Rohrstückes 21a der Bypaßleitung 21. Die Bypaßleitung 21 dient somit gleichzeitig als Führung; weitere Führungen 27 sind entsprechend gleichmäßig um den Dichtungsring 19 angeordnet, wie dies insbesondere aus Fig.5 ersichtlich wird. Die Führungen sind so vorgesehen, daß die erste Kugel 20 senkrecht auf den symmetrisch um die Achse 7a angeordneten Dichtungsring 19 aufgesetzt wird. Dies bedeutet, daß der Mittelpunkt der Kugel 20 im Zeitpunkt des Aufsetzens in der Achse 7a des Zwischenbehälters 7 liegt.

Im folgenden wird die Funktion des Zwischenbehälters 7 näher erläutert:

Bei abgeschalteter Absaugeinrichtung 5 und leerem Zwischenbehälter 7 liegt die erste Kugel 20 lose auf dem Dichtungsring 19 und die zweite Kugel 25 auf dem Nylonfaden 26 auf. Wird das Speibecken 2 nun mit festen und/oder flüssigen Bestandteilen beaufschlagt, gelangen diese über die Leitung 8 und den Einlaufanschluß 15 in den Zwischenbehälter 7. Hier fließen diese Bestandteile um die zweite Kugel 25 herum durch Schwerkraftwirkung nach unten bis zur Bodenplatte 14.

Beide Kugeln 20, 25 sind zweckmäßig aus dünnwandigem, leichtem Kunststoff hergestellt, so daß insbesondere bei der ersten Kugel 20 bereits eine geringe Flüssigkeitsmenge ausreicht, diese anzuheben, so daß die Flüssigkeit unter Schwerkraftwirkung über den Auslaufanschluß 17 abfließen kann. Um die erste Kugel 20 nicht zusätzlich durch die zweite Kugel 25 zu beschweren, ist die zweite Kugel 25 von der ersten Kugel 20 durch den Nylonfaden 26 getrennt.

Das zweite bewegliche Absperrorgan ist während dieser Zeit geschlossen, d.h. der Stempel 22 verschließt mit seinem konisch ausgestalteten Bereich 22a die Bypaßleitung 21. Dabei wird der Stempel 22 lediglich durch sein Eigengewicht auf die Bypaßleitung 21 gedrückt.

Wird nun der Sauger 3 am zahnärztlichen Behandlungsgerät 1 entnommen, schaltet sich die Absaugeinrichtung 5 an. Es wird dadurch ein Unterdruck erzeugt, der die erste Kugel 20 auf den Dichtungsring und den Stempel 22 mit seinem konisch ausgestalteten Bereich 22a auf die Bypaßleitung zieht. Beide Absperrorgane 19, 20 und 21, 22 gewährleisten dadurch einen luft- und flüssigkeitsdichten Abschluß des Zwischenbehälters 7 gegenüber der Saugleitung 4. Am Sauger 3 steht auf diese Weise die volle Saugleistung zur Verfügung, um feste und/oder flüssige Bestandteile aus dem Mund eines Patienten abzusaugen.

Wird im angeschalteten Zustand der Absaugeinrichtng das Speibecken 2 mit festen und/oder flüssigen Bestandteilen beaufschlagt, gelangen diese in der oben bechriebenen Weise in den Zwischenbehälter 7. Über den weiteren Anschluß 16 kann weiterhin Flüssigkeit von der Speibecherfüllautomatik 10 in den Zwischenbehälter 7 gelangen.

Durch den erzeugten Unterdruck wird die erste Kugel 20 derart fest auf den Dichtungsring 19 gezogen, daß diese Kugel 20 selbst dann den Auslaufanschluß 17 nicht freigibt, wenn der Flüssigkeitsstand im Zwischenbehälter 17 derart angestiegen ist, daß die Kugel 20 völlig untergetaucht ist.

Steigt der Flüssigkeitsstand über den Nylonfaden 26 an, wird die zweite Kugel 25 auf der Oberfäche der Flüssigkeit schwimmend mitgenommen, bis sie mit der Lochplatte 24 in Berührung kommt. Gelangen weiterhin feste und/oder flüssige Bestandteile in den Zwischenbehälter, so steigt der Flüssigkeitsstand an der zweiten Kugel weiter nach oben an, d.h. die zweite Kugel 25 taucht immer weiter in die Flüssigkeit ein.

Bei Erreichen eines bestimmten Flüssigkeitsstandes erzeugt das in die Flüssigkeit eingetauchte Volumen der zweiten Kugel 25 so viel Auftrieb, daß die Kraft, mit der der Stempel 22 auf die Bypaßleitung 21 gezogen wird, überwunden wird. Der Stempel 22 wird durch die zweite Kugel 25 über die am Stempel 22 befestigte Lochplatte 24 nach oben bis zum Anschlag am Deckel 23 geschoben. Auf diese Weise wird das zweite Absperrorgan 21, 22 geöffnet, so daß flüssige und feste Bestandteile über die Bypaßleitung 21 abgesaugt werden. Der Flüssigkeitsstand im Zwischenbehälter 7 sinkt, bis die zweite Kugel 25 unter der Last von Lochplatte 24 und Stempel 22 auf der Flüssigkeit schwimmt. Ein weiteres Absinken des Flüssigkeitsstandes bewirkt ein gleichzeitiges Absinken des Stempels auf die Bypaßleitung 21. Schließlich ist der Zeitpunkt erreicht, an dem der Stempel 22 durch den Unterdruck wieder fest auf die Bypaßleitung 21 gezogen wird. Der Zwischenbehälter 7 ist somit wieder luft- und flüssigkeitsdicht gegenüber der Absaugleitung 4 abgesperrt.

Wird der Zwischenbehälter 7 weiterhin mit festen und/oder flüssigen Bestandteilen beaufschlagt, wiederholt sich dieser Vorgang entsprechend.

Der ohnehin schon geringere Durchlaßquerschnitt der Bypaßleitung gegenüber dem Auslaufanschluß 17 wird außerdem noch dadurch verengt, daß auch im geöffneten Zustand des zweiten Absperrorganes 21, 22 der zylindrische Ansatz 22b des Stempels 22 in die Bypaßleitung 21 hineinragt. Dies bedeutet, daß die Saugleistung am Sauger 3 auch wahrend des geöffneten Zustandes des zweiten Absperrorganes 21, 22 nur in geringem Maße verringert wird.

Wird die Absaugeinrichtung abgeschaltet, baut sich der Unterdruck ab, so daß die erste Kugel 20 aufgrund des Auftriebes bis zum Nylonfaden 26 nach oben steigt und dadurch den Auslaufanschluß 17 freigibt. Die im Zwischenbehälter 7 angesammelten festen und/oder flüssigen Bestandteile können dann durch Schwerkraftwirkung aus dem Zwischenbehälter 7 abfließen.

Bei Integration des Speibeckens 2 - zu dem auch die Speibecherfüllautomatik 10 gehört - in die Saugleitung 4 können die im Speibecken 2 anfallenden festen und/oder flüssigen Bestandteile auf einfache Weise zusammen mit den durch den Sauger 3 abgesaugten Bestandteilen entsorgt werden. Der Zwischenbehälter 7 ermöglicht einen kontinuierlichen Ablauf der festen und flüssigen Bestandteile aus dem Speibecken, auch während die Absaugeinrichtung 5 angeschaltet ist. Außerdem steht am Sauger 3 die volle Saugleistung zur Verfügung, die nur kurzzeitig geringfügig vermindert wird. Diese Verminderung der Saugleistung tritt aber auch nur dann auf, wenn während der Behandlung mit dem Sauger das Speibecken mit festen und/oder flüssigen Bestandteilen in so großer Menge beaufschlagt wird, daß das zweite Absperrorgan 21, 22 geöffnet wird.

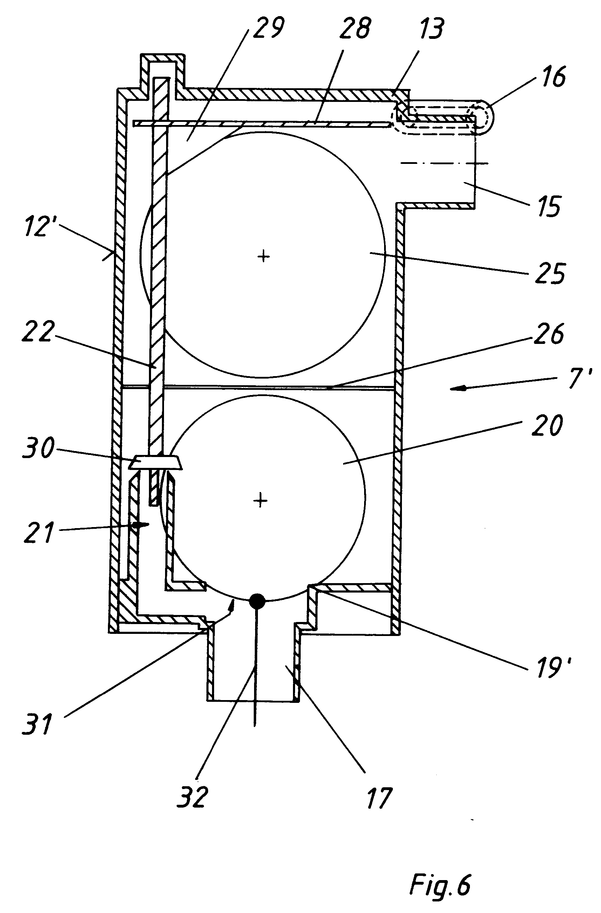

In Fig.6 ist ein zweites Ausführungsbeispiel eines Zwischenbehälters 7' dargestellt. Hierbei werden für gleiche Bauteile dieselben Bezugszeichen wie im ersten Ausführungsbeispiel verwendet.

Im folgenden werden die Unterschiede im Aufbau, im Vergleich zum ersten Ausführungsbeispiel, näher erläutert:

Der Zwischenbehälter 7' wird rein äußerlich im wesentlichen durch ein quaderförmiges Gehäuse 12' gebildet, das beispielsweise aus Polyamid in zwei Hälften hergestellt werden kann. Im oberen Bereich des Stempels 22 ist an diesem ein Arm 28 befestigt, der sich quer zum Stempel 22 erstreckt und durch eine Versteifung 29 abgestützt wird. Die Funktion des Armes 28 stimmt mit der der Lochplatte 24 des ersten Ausführungsbeispieles überein. Im unteren Bereich des Stempels 22 ist eine Dichtung 30 vorgesehen, die beispielsweise aus synthetischem Kautschuk hergestellt werden kann. Diese Dichtung 30 wirkt mit dem der Saugleitung 4 abgewandten Ende der Bypaßleitung 21 derart zusammen, daß ein flüssigkeitsdichter Verschluß entsteht. Der Stempel 22 wird oberhalb der Befestigung des Armes 28 in einer entsprechenden Ausgestaltung des Deckels 13 geführt.

Der Auslaufanschluß 17 ist wiederum im Bodenbereich des Zwischenbehälters 7' vorgesehen und steht mit dem Innenraum des Zwischenbehälters 7' über eine Öffnung 31 in Verbindung. Das erste bewegliche Absperrorgan des Zwischenbehälters 7' wird durch die erste Kugel 20 und einen Rand 19' der Öffnung 31 gebildet.

Um zu gewährleisten, daß der Ball immer mit seinem weichsten Abschnitt den Rand 19' der Öffnung 31 im Bodenbereich des Zwischenbehälters 7' berührt, ist an der ersten Kugel 20 eine Nylonseele 32 befestigt.

In seiner Funktion stimmt der Zwischenbehälter 7' mit dem Zwischenbehälter 7 des ersten Ausführungsbeispieles überein.

Die quaderförmige Ausgestaltung des Gehäuses 12' ermöglicht gegenüber dem ersten Ausführungsbeispiel eine kompaktere Bauweise und dadurch bedingt kleinere Einbaumaße.

Die Kugel 25 kann mit dem Arm 28 und dem Stempel 22 fest verbunden werden, um dem Stempel 22 eine genügende Trägheit zu verleihen und einem Klappern entgegenzuwirken.

## Patentansprüche

1. Vorrichtung zur zahnärztlichen Behandlung, enthaltend
a) ein Speibecken (2),
b) einen in den Mund eines Patienten einführbaren Sauger (3) zum Absaugen von festen und flüssigen Bestandteilen bei der zahnärztlichen Behandlung,
c) eine mit dem Sauger (3) über eine Saugleitung (4) verbundene, bei Entnahme des Saugers (3) angeschaltete Absaugeinrichtung (5),
d) einen zur zeitweisen Aufnahme von aus dem Speibecken (2) auslaufender Flüssigkeit bestimmten Zwischenbehälter (7, 7'), der über einen Einlaufanschluß (15) mit dem Speibecken und über einen im Bodenbereich des Zwischenbehälters befindlichen Auslaufanschluß (17) mit der Saugleitung (4) derart verbunden ist, daß bei geöffnetem Auslaufanschluß Flüssigkeit unter Schwerkraftwirkung aus dem Speibecken über den Zwischenbehälter abfließen kann,
e) einen im Zwischenbehälter (7, 7') vorgesehenes, durch eine erste Kugel gebildetes erstes bewegliches Absperrorgan (20) zum Verschluß des Auslaufanschlusses (17),
f) eine den Innenraum des Zwischenbehälters (7, 7') mit der Saugleitung (4) verbindende Bypass-Leitung (21), deren Durchlaßquerschnitt geringer als der des Auslaufanschlusses (17) des Zwischenbehälters (7, 7') ist,
g) ein im Zwischenbehälter (7, 7') vorgesehenes zweites bewegliches Absperrorgan (22), das durch einen in der Flüssigkeit des Zwischenbehälters schwimmenden Körper betätigbar ist und das die Bypass-Leitung (21) bis zum Erreichen eines bestimmten Flüssigkeitsstandes im Zwischenbehälter absperrt, bei Überschreiten dieses Flüssigkeitsstandes dagegen freigibt,
gekennzeichnet durch folgende Merkmale:
h) das erste bewegliche Absperrorgan (20) ist im Zwischenbehälter (7, 7') derart angeordnet,
- daß es dann, wenn bei abgeschalteter Absaugeinrichtung (5) Flüssigkeit aus dem Speibecken (2) in den Zwischenbehälter gelangt, durch diese Flüssigkeit so weit angehoben wird, daß die Flüssigkeit unter Schwerkraftwirkung über den Auslaufanschluß (17) abfließen kann,
- während das erste bewegliche Absperrorgan bei eingeschalteter Absaugeinrichtung (5) durch den hierdurch erzeugten Unterdruck den Auslaufanschluß (17) verschließt;
i) das zweite bewegliche Absperrorgan enthält einen verschiebbaren Stempel (22), der in das der Saugleitung (4) abgewandte Ende der Bypass-Leitung (21) eingreift und der durch eine in der Flüssigkeit des Zwischenbehälters schwimmende zweite Kugel (25) betätigbar ist.

2. Vorrichtung nach Anspruch 1, dadurch gekennzeichnet, daß der Stempel (22) an seinem der Bypass-Leitung (21) zugewandten unteren Ende
a) einen zylindrischen Ansatz (22b) aufweist, dessen Durchmesser kleiner als der Innendurchmesser der Bypass-Leitung ist und der mit diesem Ansatz in die Bypass-Leitung (21) eingreift,
b) ferner einen konisch ausgebildeten Bereich (22a) zum luft- und flüssigkeitsdichten Abschluß der Bypass-Leitung (21).

3. Vorrichtung nach den Ansprüchen 1 und 2, dadurch gekennzeichnet, daß der vertikal bewegliche Stempel (22) an seinem unteren Ende durch den in die BypassLeitung (21) eingreifenden zylindrischen Ansatz (22b) und an seinem oberen Ende in einer gehäusefesten Hülse (23) geführt ist.

4. Vorrichtung nach Anspruch 1, dadurch gekennzeichnet, daß als Berührungsschutz zwischen den beiden Kugeln (20, 25) ein vorzugsweise durch einen Faden (26) gebildetes Abgrenzungselement vorgesehen ist.

5. Vorrichtung nach Anspruch 1, dadurch gekennzeichnet, daß die beiden Kugeln (20, 25) aus dünnwandigem Kunststoffmaterial bestehen.

## Claims

1. Device for dental treatment, comprising
a) a spitting basin (2),
b) an aspirator (3) which can be inserted into a patient's mouth to draw off solid and fluid components during dental treatment,
c) a suction device (5) which is connected to the aspirator (3) by an aspiration tube (4) and is switched on when the aspirator (3) is removed,
d) an intermediate container (7, 7') which is intended for periodic reception of fluid running out of the spitting basin (2) and is connected by an inlet connection (15) to the spitting basin and by an outlet connection (17) located in the base region of the intermediate container to the suction tube (4) in such a way that when the outlet connection is open fluid can flow out of the spitting basin via the intermediate container under the effect of gravity,
e) a first movable shut-off device (20) which is arranged in the intermediate container (7, 7') and is formed by a first ball for closure of the outlet connection (17),
f) a bypass tube (21) which connects the interior of the intermediate container (7, 7') to the aspiration tube (4), the internal cross-section of the bypass tube being smaller than that of the outlet connection (17) of the intermediate container (7, 7'),
g) a second movable shut-off device which is provided in the intermediate container (7, 7'), can be actuated by a body floating in the fluid in the intermediate container and shuts off the bypass tube (21) until a predetermined fluid level is reached in the intermediate container but opens it when this fluid level is exceeded,
characterised by the following features:
h) the first movable shut-off device (20) is arranged in the intermediate container (7, 7') in such a way that
- when, with the suction device (5) switched off, fluid passes out of the spitting basin (2) into the intermediate container this first shut-off device is raised so high by this fluid that the fluid can flow off under the effect of gravity via the outlet connection (17),
- whereas, when the suction device (5) is switched on, the first movable shut-off device closes the outlet connection (17) due to the resulting reduced pressure;
i) the second movable shut-off device contains a movable plunger (22) which engages in the end of the bypass tube (21) facing away from the aspiration tube (4) and can be actuated by a second ball (25) floating in the fluid of the intermediate container.

2. Device as claimed in Claim 1, characterised in that the plunger (22) has at its lower end facing the bypass tube (21)
a) a cylindrical extension (22b), the diameter of which is smaller than the internal diameter of the bypass tube and which engages with this extension in the bypass tube (21),
b) and also has a conical zone (22a) for air-tight and fluid-tight closure of the bypass tube (21).

3. Device as claimed in Claims 1 and 2, characterise din that the vertically movable plunger is guided at its lower end by the cylindrical extension (22b) which engages in the bypass tube (21) and at its upper end in a bush (23) which is fixed on the housing.

4. Device as claimed in Claim 1, characterised in that a delimiting element which is preferably formed by a filament (28) is provided as protection against contact between the two balls (20, 25).

5. Device as claimed in Claim 1, characterised in that the two balls (20, 25) are made from thin-walled plastics material.

## Revendications

1. Dispositif de traitement dentaire comprenant :
a) un crachoir (2),
b) un aspirateur (3) destiné à être introduit dans la bouche d'un patient et destiné à aspirer des substances solides et liquides lors du traitement dentaire,
c) un dispositif d'aspiration (5) relié à l'aspirateur (3) par un conduit d'aspiration (4) et enclenché lors du prélèvement de l'aspirateur (3),
d) un récipient intermédiaire (7, 7') destiné à recevoir temporairement du liquide s'écoulant du crachoir (2) et relié par un raccord d'arrivée (15) au crachoir et par un raccord de sortie (17) se trouvant dans le fond du récipient intermédiaire au conduit d'aspiration (4) de manière que, lorsque le raccord de sortie est ouvert, du liquide puisse s'écouler par gravité du crachoir en passant par le récipient intermédiaire,
e) un premier organe mobile d'arrêt (20) prévu dans le récipient intermédiaire (7, 7'), formé par une première bille et destiné à obturer le raccord de sortie (17),
f) un conduit de dérivation (21) reliant le volume interne du récipient intermédiaire (7, 7') au conduit d'aspiration (4) et dont la section de passage est inférieure à celle du raccord de sortie (17) du récipient intermédiaire (7, 7'),
g) un second organe mobile d'arrêt (22) prévu dans le récipient intermédiaire (7, 7'), pouvant être actionné par un corps flottant dans le liquide du récipient intermédiaire et bloquant le conduit de dérivation (21) jusqu'à ce que le liquide se trouvant dans le récipient intermédiaire atteigne un niveau déterminé, tandis qu'il le libère lorsque ce niveau de liquide est dépassé,
caractérisé par les particularités suivantes :
h) le premier organe mobile d'arrêt est disposé dans le récipient intermédiaire (7, 7') de manière que, lorsque le dispositif d'aspiration (5) est mis hors service et que du liquide parvient du crachoir (2) dans le récipient intermédiaire, ce liquide le soulève suffisamment pour que du liquide puisse s'écouler par gravité par le raccord de sortie (17), tandis que, lorsque le dispositif d'aspiration (5) est enclenché, le premier organe mobile d'arrêt obture le raccord de sortie (17) par la dépression ainsi créée ;
i) le second organe mobile d'arrêt comprend une tige mobile (22) qui pénètre dans l'extrémité du conduit de dérivation (21) qui est tournée à l'opposé du conduit d'aspiration (4) et qui peut être actionnée par une seconde bille (25) flottant dans le liquide du récipient intermédiaire.

2. Dispositif selon la revendication 1, caractérisé en ce que la tige (22) comporte à l'extrémité inférieure tournée vers le conduit de dérivation (21)
a) un prolongement cylindrique (22b) dont le diamètre est plus petit que le diamètre intérieur du conduit de dérivation et qui pénètre par ce prolongement dans ce conduit de dérivation (21),
b) par ailleurs une partie conique (22a) d'obturation hermétique et étanche du conduit de dérivation (21).

3. Dispositif selon les revendications 1 et 2, caractérisé en ce que la tige mobile verticalement (22) est guidée à l'extrémité inférieure par le prolongement cylindrique (22b) qui pénètre dans le conduit de dérivation (21) et, à l'extrémité supérieure, dans un manchon (23) qui est solidarisé avec le boîtier.

4. Dispositif selon la revendication 1, caractérisé en ce qu'un élément de retenue formé de préférence d'un fil (26) est prévu en protection contre tout contact entre les deux billes (20, 25).

5. Dispositif selon la revendication 1, caractérisé en ce que les deux billes (20, 25) sont en matière plastique à cloison mince.
